Europäisches Patentamt

European Patent Office

Office européen des brevets

(11) Publication number: **0 477 831 A1**

## EUROPEAN PATENT APPLICATION

(21) Application number: **91116169.3**

(22) Date of filing: **23.09.91**

(51) Int. Cl.⁵: **C02F  3/10, A01K 63/04, C02F 3/06**

(30) Priority: **26.09.90 GB 9020978**
**10.01.91 GB 9100499**

(43) Date of publication of application:
**01.04.92 Bulletin  92/14**

(84) Designated Contracting States:
**DE ES FR IT NL**

(71) Applicant: **Worthington, Andrew David**
**Bradley Green**
**Redditch, Worcestershire B96 6TE(GB)**

(72) Inventor: **Worthington, Andrew David**
**Bradley Green**
**Redditch, Worcestershire B96 6TE(GB)**

(74) Representative: **Lally, William et al**
**FORRESTER & BOEHMERT**
**Franz-Joseph-Strasse 38**
**W-8000 München 40(DE)**

(54) Liquid purification apparatus and method of purification.

(57) A liquid purification apparatus, specifically but not exclusively for the purification of bodies of water containing fish (such as ponds, tanks or lakes) comprises a housing (6) containing purifications elements in the form of thin strips (12, 24, 26) of plastics material, providing a high surface area/density, upon which bacteria may grow to break down pollutants in the water. In a preferred embodiment, the plastics material comprises a filler of calcium carbonate, to react chemically with pollutants. Alternatively the invention may be utilised in the purification of other liquids, such as derived from chemical processes, or sewage treatment plants, in which bacteria may be grown on a large-surface area plastics body.

This invention is concerned with improvements relating to liquid purification, particularly but not exclusively water.

It is a requirement in for example the keeping of fish in a tank or a pond, or where fish are grown commercially in a lake, that the water be cleaned, to remove compounds of ammonia. Conventionally this may be effected by utilising a purification apparatus, through which the water is fed, to flow over purification elements on which bacteria grows, the bacteria breaking down the nitrogenous waste compounds into constituents which are harmless. Conventionally the purification apparatus may comprise surfaces upon which the bacteria may grow, so that after a period of use the apparatus becomes "mature", and may be used on a continuous basis.

Currently available apparatus suffer from a number of disadvantages, including that they are generally unduly large, and/or tend to clog, and/or are unduly heavy, and/or are expensive.

According to this invention there is provided a liquid purification apparatus comprising a housing, purification means in the housing, said purification means being in the form of one or more elements of plastics material providing a large surface area on which bacteria may grow, and means to cause or allow liquid to be purified to flow through the housing.

According to this invention there is provided a method of liquid purifications, involving the use of purifications means afforded by one or more elements of plastics material affording a large surface area within the housing, and the steps:

[a] causing or allowing bacteria to grow on the surfaces of the purification element or elements; and

[b] causing the liquid to flow through the housing for the bacteria on the purification element or elements to effect a purification action on the liquid.

Preferably the elements are of thin cross section, preferably having a cross sectional width substantially greater than the thickness, preferably being at least 5 times the thickness or 5 times the average thickness if the thickness is non-uniform.

The elements may be in the form of ribbons or platelets, and are preferably of non-flat form to avoid stacking of the elements within the housing.

Preferably the elements have a length substantially greater than the width, preferably at least 5 times the width, and may be curved in the longitudinal direction, e.g. being of spiral, helical or curled form.

Alternatively the elements may be provided with longitudinal formations to reduce surface contact therebetween, such as ribs, corrugations, dimples or pimples.

Preferably the elements are resiliently deformable, and are preferably "crushed" to a small degree into the housing to maximise surface area whilst retaining separation between the surfaces thereof.

Alternatively the elements may be freely flexible, allowing them to move freely in part at least of their length as liquid is flowed through the housing. Thus ribbons may be secured at one part of the housing, such as adjacent to an inlet thereof, to waft in the current as the liquid flows through the housing.

According to this invention there is also provided a water purification apparatus comprising a housing, a plurality of elements in the housing, said elements providing a surface area on which bacteria may grow, and being in the form of ribbons of plastics material.

Conveniently the ribbons are thin, e.g. having a thickness of less than 1mm, preferably about 0.25 mm or less, and conveniently have a width of between 3 and 10 mm. Preferably the ribbons are elongate, e.g. being 2 centimetres or more long and may be several metres long.

Preferably the ribbons are provided with means to reduce surface to surface contact within the housing, e.g. by being provided with separation maintaining formations such as ribs, or being of separation maintaining construction such as being of twisted form, e.g. being curled.

According to this invention there is also provided a purification apparatus comprising a housing, and purifications elements in the form of thin strips of plastics within the housing, the purification elements being formed from plastics material comprising filler which is chemically reactant with the pollutants to be removed from the liquid, flow of polluted liquid through the tank bringing pollutants into contact with the filler material contained within the purification elements.

There will now be given a detailed description, to be read with reference to the accompanying drawings, of a water purification apparatus which are preferred embodiments of this invention which have been selected for the purposes of illustrating the invention by way of example.

In the accompanying drawings:

**FIGURE 1** is a schematic side elevation of a first embodiment;

**FIGURE 2a and 2b** illustrate a method of manufacture of purification elements for use in the first embodiment; and

**FIGURES 3a, 3b and 3c** shows a variety of different shapes of purification elements which may be utilised in the apparatus.

The apparatus which is the first embodiment of this invention comprises a housing in the form of a tank 6, provided with an inlet 8 and an outlet 10.

Located within the tank are a large number of purification elements 12, being of thin plastics material and providing a large surface area on which bacteria may grow.

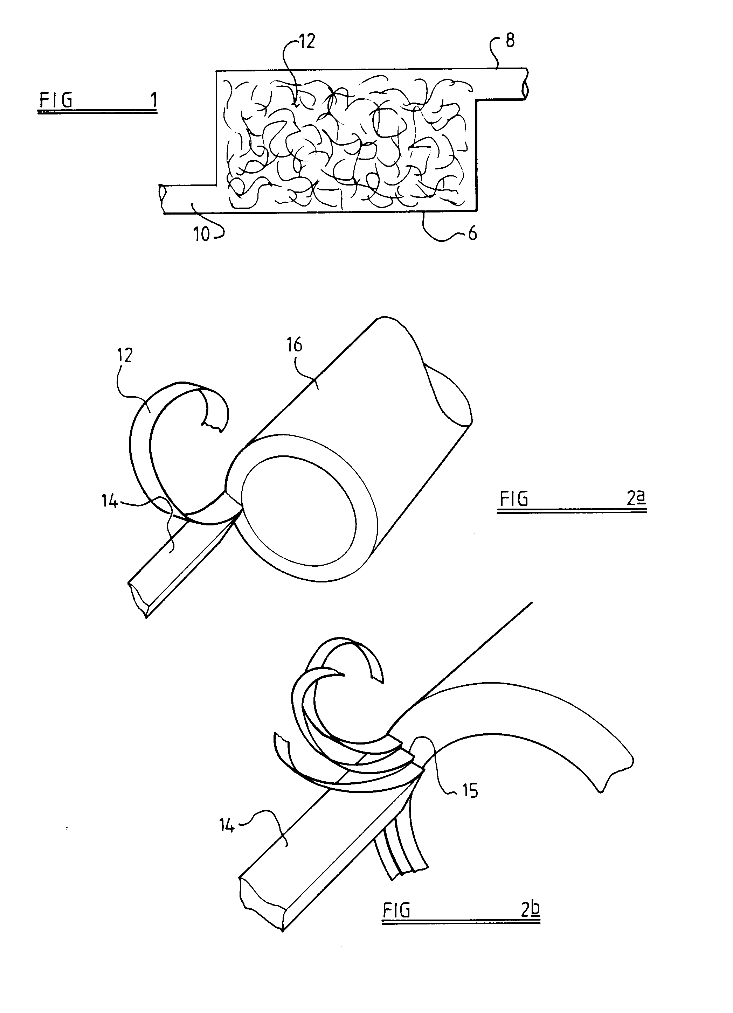

In the first embodiment the purification elements are produced by machining against the end face of a tube of extruded unplasticised PVC, using a parting tool to produce thin spirals of shaved plastics material. In this embodiment the parting tool 14 is moved slowly towards the end face of the tube 16, producing continuous "curls" of shaped material, which may break, or be broken, or be produced to a reduced length. If desired the parting tool 14 may have a stepped leading end, such as is shown at 15 in Figure 2b, to produce three elements as the tube is rotated about its longitudinal axis.

Other methods of production may however be used, including (e.g.) shredding unplasticised P.V.C. sheet of (typically) 25 microns thickness.

The elements produced in this manner may be packed into the tank, preferably being compressed somewhat to maximise the surface area provided thereby within the tank, but preferably not to an extent sufficient to cause significant deformation of the elements, as would unduly increase the surface to surface contact thereby.

In the first embodiment the elements have a thickness of less than 1 mm, conveniently being 0.25 mm or less, having a width of between 3 and 9 mm, conveniently about 5 mm. The length of each element is preferably significantly greater than the width, being in the order of 2 centimetres or, and will vary between (typically) 2 centimetres to several metres, dependant upon the manner in which the elements are shaved from the barstock.

In the use of the purification apparatus, for example in the maintenance of acceptable purity of a 10 cubic metre pond, a tank having a volume of 0.5 cubic metres may be utilised, through which water is flowed at a convenient rate, the tank either being maintained filled, or water being trickle-fed through the tank.

In such circumstances the surface area provided by the purification elements 12 would typically be within the range 100 to 1000 square metres/cubic metre.

The tank will preferably be seeded, and may typically become fully mature within a period of about three months, the bacteria growing and adhering to the surfaces of the purification elements, to remove ammonia compounds from the water, and converting nitrite compounds to nitrate compounds.

Additionally due to the extensive surface area, the rate of flow of the water over the surfaces will be low, allowing fine solids in suspension to be digested by bacterial or microbial action, residual materials including orgnic debris flowing through the outlet and being returned in harmless condition to the body of water, the open structure reducing retention of such materials and reducing tendency for clogging to occur.

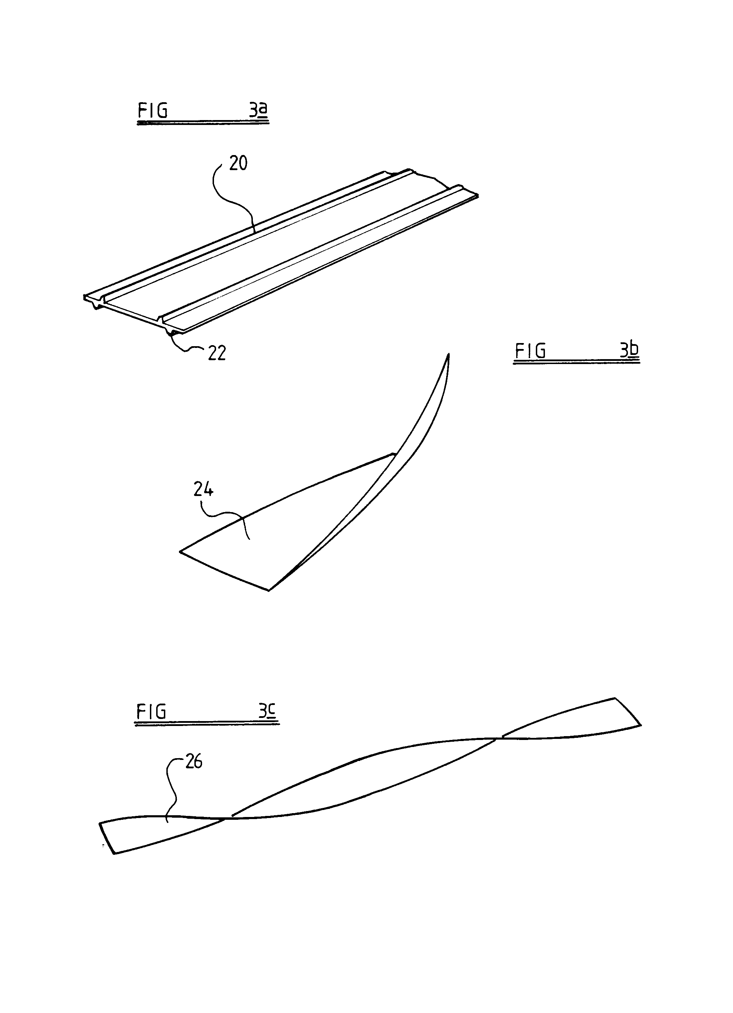

Figure 3 illustrates alternative forms of purification element, which may be utilised in the performance of this invention. The element 20 is in the form of a thin plank, ribs 22 being provided in the longitudinal direction to retain separation between the surfaces of adjacent elements. The element 24 is in the form of a platelet, being provided with a curved form, similarly to reduce stacking of the elements, whilst the element 26 is twisted into helical form, again reducing surface to surface contact.

In a second embodiment, purification elements are utilised which are in the form of elongate strips of generally rectangular cross-section formed in extensive lengths, in excess of 100 metres. In this embodiment, the elements are formed by a stretch/extrusion operation, in which plastics material is extruded from a dye, being provided with surface formations as aforesaid, either by virtue of the shape of the dye, or subsequently passing through a pair of rollers, and then being pulled to align the molecules, simultaneously reducing the thickness of the strip. In this embodiment, a strip having a thickness of 0.25 mm is utilised, localised embossing increasing the cross-sectional area to 0.43 mm. The strip is 7 mm wide, and is provided typically in reels of 750 metres in length. The strip is unreeled and placed into the housing, wherein it is packed or crushed, involving some deformation of the strip, the surface formations retaining some separation between adjacent strips.

In this embodiment, the strip is about 7 mm wide, and the surface area is increased from a nominal 0.014 square metres per metre to 0.022 square metres per metre, by virtue of the effect of the surface formations.

Into a tank having a volume of 0.5 cubic metres seven reels of 750 metre lengths are placed, providing an effective surface area within the tank of 115.5 square metres, i.e. 231 square metres per cubic metre. In practice, it is believed that an area in excess of 100 square metres per cubic metre performs very well, and if desired the surface area can be increased to 500 square metres per cubic metre.

Typically, for a pond of 35 cubic metre volume, where prior settlement of large faecal solids has taken place, a surface area of 250 square metres, for the growth bacteria, would be adequate, and this could readily be contained within a purification apparatus of one cubic metre in volume or less.

In the second embodiment, the purification elements are provided from plastics material, conveniently polypropylene, containing a filler such that the density is 1.0 or greater, the filler material preferably including chalk, and preferably being made up of 20% to 40% of the total weight. In this way, in addition to the purification elements providing extensive surfaces upon which bacteria may grow, the purification elements also provide for a chemical reaction with pollutants, to neutralise materials such as nitrogenous acids.

Whilst the invention has been described above in relation to the purification of water derived from bodies of water containing fish, such as fish tanks, ponds or lakes, including lakes in which fish are "farmed" on an industrial basis, it will be appreciated that the invention may be utilised more broadly, including the purification of liquids other than water.

For example the invention may be utilised on a larger scale for the digestion of sewage. Alternatively, the invention may be utilised to remove chemical materials, by virtue of the purification elements containing, as a filler material, a chemical which will react with the pollutants. Thus, in one aspect the utilisation of the invention without the growth of bacteria on the purification elements is contemplated.

An additional advantage of the invention is that, as polluted water flows through the purification means, the flow rate is significantly reduced, and allows mineral deposits, such as iron oxide, to fall from suspension towards the bottom of the tank, where it remains until cleaning.

By virtue of the open structure of the apparatus, it may readily be cleaned, to allow collected particulate material to be washed therefrom.

The features disclosed in the foregoing description, or the following claims, or the accompanying drawings, expressed in their specific forms or in terms of a means for performing the disclosed function, or a method or process for attaining the disclosed result, as appropriate, may, separately or in any combination of such features, be utilised for realising the invention in diverse forms thereof.

**Claims**

1. Liquid purification apparatus comprising a housing (6), purification means (12) in the housing, said purifications means being in the form of one or more elements of plastics material providing a large surface area on which bacteria may grow, and means (8, 10) to cause or allow liquid to be purified to flow through the housing.

2. A method of liquid purifications, involving the use of purifications means afforded by one or more elements of plastics material affording a large surface area within the housing, and the steps:

   [a] causing or allowing bacteria to grow on the surfaces of the purification element or elements; and

   [b] causing the liquid to flow through the housing for the bacteria on the purification element or elements to effect a purification action on the liquid.

3. The invention according to one of Claims 1 and 2 wherein the or each element has a cross-sectional width at least 5 times the thickness.

4. The invention according to any one of Claims 1, 2 and 3 wherein the or each element has a thickness of less than 1mm.

5. The invention according to any one of the preceding claims wherein the or each element has a length of at least 5 times its width.

6. The invention according to any one of Claims 1 to 5 wherein the purification means comprises a plurality of elements of non-flat form.

7. The invention according to any one of Claims 1 to 5 wherein the purification means comprises one or more elongate strips of generally uniform cross-section.

8. The invention according to Claim 7 wherein the or each strip has a thickness less than 0.5 mm and a length in excess of 100 metres, and is introduced into the housing in random array.

9. The invention according to any one of the preceding claims wherein the surface area provided in the housing by the purification means is in excess of 100 square/cubic metres.

10. The invention according to any one of Claims 7, 8 and 9 wherein the or each strip is generally rectangular cross-section, being provided with surface formations to reduce surface-to-surface contact and to increase the surface area.

11. The invention according to any one of the preceding claims wherein the plastics material of the purification means contains a filler material having a chemical reaction with pollutant materials contained in the liquid.

12. The invention according to Claim 11 wherein the liquid to be purified is water derived from fish-containing bodies of water (e.g. ponds, tanks or lakes) and the filler comprises calcium carbonate.

13. Purification apparatus comprising a housing, and purifications elements in the form of thin strips (12, 24, 26) of plastics within the housing, the purification elements being formed from plastics material comprising filler which is chemically reactant with the pollutants to be removed from the liquid, flow of polluted liquid through the tank bringing pollutants into contact with the filler material contained within the purification elements.

FIG 1

FIG 2a

FIG 2b

FIG        3a

20

22

FIG        3b

24

FIG        3c

26

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 186 125 (CHIYODA CHEMICAL ENGINEERING & CONSTRUCTION COMPANY) <br> * page 35; claims 1,3 * * * page 33 - page 34 * * * page 8, line 7 - line 11 * * | 1-8,10-13 | C 02 F 3/10 <br> A 01 K 63/04 <br> C 02 F 3/06 |
| | – – – | | |
| Y | EP-A-0 289 666 (YEDA RESEARCH AND DEVELOPMENT COMPANY LTD) <br> * page 2, line 19 - line 51 * * | 1-8,10-13 | |
| | – – – | | |
| A | EP-A-0 145 853 (FELIX SCHOELLER JR. GMBH & CO KG) <br> * page 12; claims 1,8-10 * * * page 5, line 14 - line 26 * * | 1-7,10 | |
| | – – – | | |
| A | CH-A-621 263 (CHEMAP AG)Front page; abstract <br> * page 2, left column, line 44 - right column, line 39 * * | 1,2 | |
| | – – – | | |
| A | FR-A-2 490 623 (DEGREMONT)1,3 <br> * page 6 * * | 1,12 | |
| | – – – | | |
| P,X | WO-A-9 101 279 (COFIDO SOCIETE COOPERATIVE) <br> * page 10; claims 1,5,7-11 * * * page 5, line 9 - line 12 * * * page 6, line 24 - line 30 * * | 1-5,7 | TECHNICAL FIELDS SEARCHED (Int. Cl.5) |
| A | | 8,9 | C 02 F |
| | – – – – – | | |

The present search report has been drawn up for all claims

| Place of search | Date of completion of search | Examiner |
|---|---|---|
| The Hague | 06 January 92 | TEPLY J. |